Europäisches Patentamt

European Patent Office

Office européen des brevets

(19)

(11) Veröffentlichungsnummer: **0 309 523 B1**

(12) **EUROPÄISCHE PATENTSCHRIFT**

(45) Veröffentlichungstag der Patentschrift: **07.07.93**

(21) Anmeldenummer: **88903176.1**

(22) Anmeldetag: **13.04.88**

(86) Internationale Anmeldenummer:
**PCT/DE88/00230**

(87) Internationale Veröffentlichungsnummer:
**WO 88/07822 (20.10.88 88/23)**

Die Akte enthält technische Angaben, die nach
dem Eingang der Anmeldung eingereicht wurden
und die nicht in dieser Patentschrift enthalten sind.

(51) Int. Cl.5: **A23J 3/00**, A23K 1/16,
A23L 1/227, A23L 1/231

(54) **GESAMTEIWEISS-ABBAUPRODUKT.**

(30) Priorität: **15.04.87 DE 3712825**

(43) Veröffentlichungstag der Anmeldung:
**05.04.89 Patentblatt 89/14**

(45) Bekanntmachung des Hinweises auf die
Patenterteilung:
**07.07.93 Patentblatt 93/27**

(84) Benannte Vertragsstaaten:
**AT BE CH DE FR GB IT LI LU NL SE**

(56) Entgegenhaltungen:
**EP-A- 0 087 769**
**EP-A- 0 235 908**
**DE-B-15 180 68**
**FR-A- 2 399 213**

(73) Patentinhaber: **Diamalt GmbH**
**Georg-Reismüller-Str. 34**
**W-8000 München 50(DE)**

(72) Erfinder: **KOLBECK, Winfried**
**Pläntschweg 10**
**W-8000 München 60(DE)**
Erfinder: **PYTTLIK, Heinz**
**Georg-Reismüller-Str. 46**
**W-8000 München 50(DE)**
Erfinder: **GRASIS, Maruta**
**Asamstr. 8**
**W-8000 München 90(DE)**

(74) Vertreter: **Keller, Günter et al**
**Lederer, Keller & Riederer Lucile-**
**Grahn-Strasse 22**
**W-8000 München 80 (DE)**

Chemical Abstracts, vol. 92, no. 23, June 1980, (Columbus, Ohio, US), G. Zaghini et al.: "Addition of amino acids and oligopeptides to piglet diets. I. Effects on growth performance and on the development of intestinal flora", see p. 548, abstract 196761r

Chemical Abstracts, vol. 72, no. 19, 11 May 1970, (Columbus, Ohio, US), J. Solms et al.: "Taste of amino acids, peptides, and proteins", see p. 237, abstract 99254g

Chemical Abstracts, vol. 93, no. 13, September 1980, (Columbus, Ohio, US), see p. 539, abstract 130957y

Die Bestandteile der Lebensmittel - Schormüller S. 169, 229, 230

## Beschreibung

Die Erfindung betrifft ein Verfahren zur Herstellung eines mineralsalzfreien Gesamteiweiß-Abbauprodukts und seine Verwendung als Fleischaromaprecursor und Proteinquelle insbesondere in Tiernahrungsmitteln.

Die Bedeutung der Eiweißstoffe und ihrer Bausteine, der Aminosäuren, für die Ernährung und Medizin ist allgemein bekannt. Viele der natürlichen Eiweißstoffe sind jedoch nicht verwertbar, da sie unverdaulich und damit für Ernährungszwecke ungeeignet sind. Von größtem Interesse ist daher eine wirtschaftliche Umwandlung von Eiweißstoffen jedweder Art in ihre Aminosäure- und Oligopeptidbestandteile.

Es ist bekannt, Eiweißstoffe hydrolytisch oder enzymatisch in verdaubare Abbauprodukte umzuwandeln. So werden z.B. unverdauliche Keratineiweißstoffe, wie Hühnerfedern, Horn oder Borsten sowie die gesamten Eiweißverbindungen ganzer Tierkadaver, durch Einwirken von Wasser bzw. Wasserdampf bei hohen Drücken und Temperaturen überwiegend zu verdaubaren Peptiden abgebaut. Auch das "Toasten" (= Behandeln mit überhitztem Wasserdampf) von Sojaproteinen dient dem Zweck, unverdauliche Anteile des Sojaeiweisses für Futtermittel brauchbar zu machen.

Nachteilig hierbei ist, daß der Abbau unspezifisch stattfindet und bestimmte, thermo-labile, essentielle Aminosäuren, wie Methionin und Cystin, zerstört werden. Während z.B. unbehandelte Hühnerfedern einen Cystingehalt von 6-7% aufweisen, enthält "getoastetes" Hühnermehl nur noch ca. 1% Cystin.

Die enzymatische Methode des Eiweißabbaus führt unter speziellen Bedingungen zwar teilweise bis zu den Aminosäuren, ist jedoch beschränkt auf lösliche Eiweißstoffe, wie Kasein, Gelatine, o.ä., die bei den notwendig neutralen pH-Werten zumindest größtenteils löslich sind. Unlösliche Proteine, wie z.B. Keratin, können auf diesem Wege nicht direkt in verwertbare Eiweißabbauprodukte übergeführt werden.

Schließlich ist es bekannt, jede Art von Eiweiß durch Mineralsäuren zu hydrolysieren und das Hydrolysat anschließend durch Neutralisationsmittel, wie Natronlauge, Soda u. dgl., zu neutralisieren. Derartige Produkte werden bislang z.B. als Speisewürzen verwendet, oder es werden hieraus einzelne Aminosäuren durch an sich bekannte Methoden, wie Kristallisation oder spezifische Fällung, isoliert. Auf diese Art werden Aminosäuren, wie Glutaminsäure, Tyrosin, Arginin, Leucin und Cystin, hergestellt.

Nachteilig bei diesem Verfahren ist einmal die Huminbildung, die zu dunklen, kolloidalen Lösungen führt, die nicht nur sehr große Mengen teurer Aktivkohle zur Entfärbung benötigen, sondern auch für Ausbeuteverluste an den zu isolierenden Aminosäuren verantwortlich sind.

Ein weiterer, mindestens ebenso großer Nachteil derartiger Hydrolysate ist der bei der Neutralisation zwangsläufig anfallende, hohe Gehalt an anorganischen Salzen. Abgesehen von der Herstellung von Speisewürzen, bei denen der ca. 25%-ige Kochsalzgehalt erwünscht ist, erfordert der Salzgehalt eine weitere Reinigungsoperation und verbietet die weitere Anwendung des biologisch an sich sehr hochwertigen Hydrolysats.

Eine Möglichkeit, zu einem salzfreien Eiweißhydrolysat zu kommen, besteht darin, die nach der Säurehydrolyse anfallende Lösung durch Ionenaustauscherchromatographie zu neutralisieren. Dieses Verfahren hat jedoch den schwerwiegenden Nachteil, daß während des Neutralisationsvorganges Aminosäuren, wie vor allem Cystin und Tyrosin, bereits ausfallen und nur durch umständliche, zusätzliche Verfahrensschritte dem Gesamthydrolysat wieder zugeführt werden können. Auch weniger schwerlösliche Aminosäuren bleiben auf dem Austauschharz absorbiert und können nur durch wirtschaftlich uninteressante Lösung mittelmengen wieder isoliert werden.

In Chemical Abstracts 93, Nr. 13, 130 957y wird ein zweistufiges, speziell für Casein entwickeltes Hydrolyseverfahren offenbart, womit die Qualität und die Ausbeute an Casein-Hydrolysat verbessert werden soll.

Die FR-A-23 99 213 offenbart ein Verfahren zur Extraktion von Aminosäuren aus biologischem Proteinmaterial.

Von dem Verfahren der elektrolytischen Neutralisation wurde bislang nur bei der Reindarstellung von einzelnen Aminosäuren Gebrauch gemacht. So beschreibt die DT-PS 1 518 068 die Herstellung einzelner freier Aminosäuren aus ihren Säureadditionssalzen durch Elektrolyse unter Verwendung eines Diaphragmas.

Aus verschiedenen Gründen war es aber nicht zu erwarten, daß eine elektrolytische Neutralisation auf ein stark mineralsaures, komplexes Gemisch aus verschiedenen Aminosäuren und Oligopeptiden anzuwenden wäre. Wegen der überschüssigen Mineralsäure muß hier die Elektrolyse über einen erheblich längeren Zeitraum einwirken. Betrachtet man den Vorgang von einer beispielsweise sehr empfindlichen Aminosäure aus, wie Cystin oder Cystein, so muß bei einer Konzentration von ca. 10 % dieser Aminosäuren, bezogen auf das gesamte, feste Eiweißabbauprodukt, mindestens die 10-fache, molare Wasserstoff-Ionenkonzentration durch den Kathodenstrom entladen werden, wenn im günstigsten, theoretischen Fall das Aminosäure-/Mineralsäureverhältnis 1:1 ist. In der Praxis ist das Aminosäure-/MineralsäureverhältniS immer höher als 1:1.

Es wurde nun gefunden, daß man ein weitgehend neutrales und mineralsalzfreies Gesamteiweiß-Abbauprodukt bestehend aus 1-99 Gew.-% einer Mischung der Aminosäuren, aus denen der natürliche Eiweißstoff aufgebaut ist, erhalten kann, wenn man nach der mineralsauren Hydrolyse eines Proteinmaterials das Hydrolysat einer elektrolytischen Neutralisation und Reduktion unter Verwendung eines Diaphragmas unterwirft und das Elektrolysat anschließend gegebenenfalls eindampft. Das Eiweißabbauprodukt kann bis 99 Gew.-% Oligopeptide enthalten, vorzugsweise besteht es jedoch aus mindestens 60 Gew.-%, insbesondere mindestens 70 Gew.-% Aminosäuren. Ein bevorzugtes Eiweißmaterial ist Keratin.

Das erfindungsgemäße Verfahren ist dadurch gekennzeichnet, daß man eine cysteinhaltige Proteinquelle aus der Gruppe Keratine, Weizenkleber und Sojaprotein mit Salzsäure hydrolysiert, das erhaltene Eiweißhydrolysat einer elektrolytischen Neutralisation und Reduktion unter Verwendung eines Diaphragmas unterwirft und das Elektrolysat anschließend gegebenenfalls eindampft.

Da bekannt ist, daß Gemische, selbst reinster Aminosäuren, sich im Gegensatz zu den reinen Einzelverbindungen bei wasserfreier Lagerung kondensierend bzw. zersetzend verändern, war zu erwarten, daß sich derartig rohe Mischungen aus Aminosäuren, Oligopeptiden und Huminen, wie sie nach dem Mineralsäureaufschluß erhalten werden, unter den Reaktionsbedingugen einer Elektrolyse negativ verändern und zu unbrauchbaren Produkten werden. Auch war die Durchführbarkeit einer Elektrolyse zweifelhaft, da sowohl durch Verunreinigungen als auch durch Produktinhaltsstoffe Verlegung und Verschlammung von Kathoden- und/oder Diaphragmenmaterial zu erwarten war. Führt man z.B. die elektrolytische Neutralisation eines schwerlöslichen, reinen Aminosäurehydrochlorids, wie z.B. Leucinhydrochlorid, durch, so sind nur ca. 6%-ige Kathodenkonzentrationen möglich. Anderenfalls verlegt das im Verlauf der Elektrolyse ausfallende Leucin die Kathoden und der Stromfluß wird allzu früh unterbunden. Bei einer derart niedrigen Kathodenkonzentration ist jedoch das Verfahren nicht mehr wirtschaftlich, da die Elektrolysedauer zu lang wird.

Bekanntlich kann man Cystin elektrolytisch zu Cystein reduzieren. Auch hierbei spielt die Reinheit des Ausgangsmaterials eine große Rolle. Verwendet man mangelhaft gereinigtes Cystin aus Keratin, so kommt es unter Elektrolysebedingungen zu einer starken Verlegung der Diaphragmenporen, wodurch eine wirtschaftliche Elektrolyse unmöglich wird.

Auch in anderer Weise ist die wirtschaftliche Problematik der elektrolytischen Neutralisation von Eiweißhydrolysaten und Einzelaminosäurehydrogensalzen völlig unterschiedlich. Bei der Isolierung von Einzelaminosäuren aus ihren reinen, sauren Salzen handelt es sich meist um teure Substanzen, bei denen Energieaufwand und Apparateverschleiß gegenüber z.B. Substanzverlust von untergeordneter Bedeutung sind. Hier kann man also ohne weiteres in Einzelchargen arbeiten und den Verlust von zerstörten Kohleanoden in Kauf nehmen.

Bei den erfindungsgemäßen Eiweißabbauprodukten spielt dagegen die wirtschaftliche Herstellbarkeit eine wesentliche Rolle. Das Verfahren zur Herstellung der erfindungsgemäßen Produkte ist nur in kontinuierlicher Verfahrensweise sinnvoll durchführbar. In derartigen Anlagen müssen die Verschleißteile jedoch minimal gehalten werden. Der Erhalt der Kohleanoden in einer kontinuierlichen Anlage, verbunden mit energiesparender, niedriger Anodenkonzentration,ist deshalb eine entscheidende Bedingung für das erfindungsgemäße Verfahren.

Überraschend ist ferner, daß während der Elektrolyse des Eiweißhydrolysats die durch Huminstoffe stark gedunkelte Lösung eindrucksvoll aufgehellt wird. Auf diese Weise werden offensichtlich negative Verunreinigungseffekte auf den Elektrolysevorgang verhindert. Eine kostspielige Aktivkohlebehandlung kann in den meisten Fällen unterbleiben. Abgesehen von den direkten Kostenvorteilen der Kohleeinsparung ist dieser Effekt zudem maßgebend für die besonders hohe Isolierbarkeit einzelner Inhaltsstoffe.

Ein ebenfalls wesentliches Kennzeichen der erfindungsgemäßen Produkte ist, daß sie völlig frei von Fremdstoffen, wie z.B. anorganischen Salzen sind, die nach herkömmlichen Verfahren bei der Neutralisation entstehen. Mit Ausnahme der an die basischen Aminosäuren gebundenen Mineralsäureanionen, enthalten die erfindungsgemäßen Produkte nur die biologischen Bestandteile des Ausgangsproteins.

Es entstehen also weitgehend neutrale und bereits sehr reine Eiweißabbauprodukte, die hervorragend geeignet sind, Probleme des Proteinbedarfs für Ernährung, Medizin und Kosmetik zu lösen. Von besonderer Bedeutung dürfte hier sein, daß dies auch für Eiweißstoffe gilt, die bislang als nur mangelhaft oder nicht verwendbar gelten. Bedeutsam ist weiterhin, daß die Reinheit der erfindungsgemäßen Produkte für die Isolierbarkeit einzelner Aminosäuren aus dem Gemisch eine wesentliche Rolle spielt.

Es ist bekannt, daß die Anwesenheit von z.B. Kochsalz die Löslichkeit einzelner Aminosäuren erhöht und damit die Isolierbarkeit erschwert. Ähnliches ist jedoch auch für die Anwesenheit begleitender Aminosäure bekannt. Überraschenderweise lassen sich jedoch aus dem erfindungsgemäßen Produkt - offenbar bedingt durch ihre verfahrensspezifische Reinheit - einzelne Aminosäuren in bislang nicht bekannten Ausbeuten isolieren.

So werden aus Schlempe oder Getreidekleber Glutaminsäure, Leucin und/oder Tyrosin mit wesentlich höheren Ausbeuten isolierbar. Besonders bedeutsam ist, daß der isolierbare Anteil an Cystin aus Keratineiweiß, neben anderen Aminosäuren, Glutaminsäure, Leucin und Tyrosin sich ebenfalls erheblich steigern läßt. Man erzielt Ausbeuten, die zwischen dem Anderthalbfachen und dem Dreifachen der bisher bekannten Werte liegen. Die besonders vorteilhafte Cystinisolierung ist um so erstaunlicher, als ja während des Elektrolyseprozesses die ursprünglich als Cystin vorliegende Schwefelaminosäure zunächst zu Cystein reduziert wird.

Aufgrund der verfahrensspezifischen Reinheit des Produktes ist es jedoch möglich, durch dosierte Oxydation anschließend Cystein quantitativ in Cystin überzuführen und in hervorragender Ausbeute zu isolieren. Da Tyrosin vor der Luftoxydation ebenfalls in guten Ausbeuten und hoher Reinheit abgetrennt werden kann, entfällt die normalerweise aufwendige Trennung der beiden schwerlöslichen Aminosäuren Cystin und Tyrosin.

Ein weiterer, wirtschaftlich besonders vorteilhafter Faktor ist, daß die nach der Isolierung einzelner Aminosäuren verbleibenden Restgemische an im wesentlichen Aminosäuren so rein und physiologisch unbedenklich sind, daß sie z.B. als hochwertiges Proteinfuttermittel verwendet werden können. Da die Isolierung einzelner Aminosäuren vorteilhaft immer aus solchen Proteinen vorgenommen wird, die besonders reich an diesen Aminosäuren sind, verbleibt trotz hoher Ausbeuten an diesen Aminosäuren entweder genügend zurück oder man führt die gerade notwendige Menge zurück, um ein vollwertiges Proteinernährungsprodukt zu erhalten.

Die erfindungsgemäßen Produkte eignen sich auch in ihrer Gesamtheit hervorragend dafür, weitere Reinigungsschritte je nach Verwendungszweck anschließen zu lassen. Derartige Reinigungsschritte sind z.B. Aktivkohleabsorption, normale und Elektrodialyse, Molekularfiltration, Ionenaustauschchromatographie und dgl.. So lassen sich z.B. durch Kombination von Aktivkohleabsorption und Molekularfiltration Gemische definierter Aminosäuren herstellen, die praktisch frei von Peptiden sind. Besonders kennzeichnend und überraschend ist, daß derartige Gemische nach dem Trocknen aufgrund ihrer Reinheit praktisch nicht mehr hygroskopisch sind. Der Umstand, daß die gemäß Stand der Technik erhaltenen Eiweißhydrolysate stark hygroskopisch sind, stellt ein bekanntes Problem dar, welches bereits dadurch zu lösen versucht wurde, daß man dem Eiweißhydrolysat ein Stärkehydrolysat zumischte (DT-AS 1 937 687). Die Erfindung bietet nun eine sehr wirtschaftliche Methode, um derartige hochreine, nicht hygroskopische Gemische herzustellen, die den Reinheitsanforderungen von Kosmetik, Medizin und Diätetik genügen.

Für das erfindungsgemäße Verfahren eignen sich sämtliche Eiweißstoffe, die zur Gewinnung einzelner Aminosäuren oder einer definierten, vollwertigen Mischung herangezogen werden können. Solche Eiweißstoffe sind z.B. Weizen- und Maiskleber, Schlempe, Schweineborsten, Menschenhaare, Hühnerfedern, Klauen und Horn, Kasein, Sojaeiweiß und dgl..

Als Aufschlußsäuren für die mineralsaure Hydrolyse eignen sich Mineralsäuren, deren Anionen eine geeignete Trennmembran gegenüber Aminosäuren genügend selektiv durchdringen können. Bevorzugt kommt Salzsäure zur Anwendung, da sie nach dem Aufschluß vor der elektrolytischen Neutralisation durch Vakuumverdampfung im theoretisch günstigsten Fall auf den Teil vermindert werden kann, der dem zur Salzbildung befähigten Gehalt an freien Aminosäuren und Oligopeptide entspricht.

Das Eiweißhydrolysat, welches der elektrolytischen Neutralisation unterworfen wird, besitzt im allgemeinen einen pH-Wert von <0 bis 1,5, vorzugsweise 0 bis 0,5.

Die elektrolytische Neutralisation wird im allgemeinen bei einer Temperatur von 10-60°C, vorzugsweise 20-60°C durchgeführt. Eine Stromdichte von 0,005 - 0,3, vorzugsweise 0,01 - 0,2 A/cm$^2$ ist geeignet. Das Elektropotential beträgt im allgemeinen 4-40, vorzugsweise 6-30 Volt.

Vorzugsweise wird das stark saure Hydrolyseprodukt in den Kathodenraum einer Elektrolyseeinrichtung gegeben, die eine Kathode aus Quecksilber, Kupfer, Blei, Eisen oder Zinn enthält und eine Anode aus Kohle, Platin oder anderen oxydationsstabilen Materialien, sowie ein Diaphragma zwischen Anodenraum und Kathodenraum aufweist. Als Diaphragmen eignen sich solche, die die Anionen aus dem Kathodenraum passieren lassen, zweckmäßigerweise eine Membran insbesondere eine Tonmembran, mit einer Porengröße von 0,5-10μ. Als Anodenflüssigkeit dient eine 1-30 Gew.-%-ige, vorzugsweise 2-16 Gew.-%-ige Lösung der Mineralsäure, die zum hydrolytischen Aufschluß verwendet wurde. Wesentlich ist, daß die Anodenflüssigkeit mit niedriger Mineralsäurekonzentration im Durchfluß an der Anode, vorzugsweise Kohleanode, vorbeifließt. Im Sammelgefäß kann die ursprüngliche Ausgangskonzentration wieder eingestellt werden. Hierdurch ist gewährleistet, daß die Neutralisation schnell und in wirtschaftlicher Weise abläuft. Verwendet man stehende Anodenflüssigkeit oder solche mit zu niedrigem Durchfluß, so werden bei Anodenflüssigkeit mit niedriger Mineralsäurekonzentration die Graphitanoden sehr schnell zerstört. Bei höheren Konzentrationen der Anodenflüssigkeit, z.B. >16 Gew.-%, werden die Anoden zwar nicht zerstört, der Energieverbrauch liegt jedoch dann etwa doppelt so hoch wie bei der Verwendung niedriger Mineralsäurekonzentrationen Die Konzentration des Eiweißabbauproduktes für die Elektroylse beträgt 10-80 Gew.-%, vorzugsweise 30-50 Gew.-%. Das Elektrolyseverfahren läßt sich chargenweise diskontinuierlich und kontinuierlich in mehreren, hintereinandergeschalteten Elektrolysezellen durchführen, wobei bevorzugt wird, daß die Anodenflüssigkeit - insbesondere bei Verwendung von Kohleanoden - in der oben beschriebenen Weise kontinuierlich durchströmt und gegebenenfalls regeneriert wird.

Als besonders günstig hat sich der Einsatz einer semipermeablen Membran erwiesen.

Vorzugsweise führt man die Elektrolyse bis zu einem pH-Wert von 0,5 - 4,5, insbesondere 1,5 - 2,0.

Eine interessante Variante des erfindungsgemäßen Verfahrens besteht darin, daß Eiweiß-, insbesondere Keratinmaterial zunächst mit Mineralsäure in Peptidabbauprodukte umzuwandeln und den weiteren Abbau bis zu den Aminosäuren nach der elektrolytischen Neutralisation enzymatisch vorzunehmen. Man löst hierzu das Keratin schonend in wäßriger Mineralsäure bei z.B. 50-60 °C, verdampft den Überschuß an Mineralsäure im Vakuum und elektrolysiert wie beschrieben. Nach der Neutralisation lassen sich Peptide durch Fällung, Molekularfiltration oder Chromatographie isolieren oder mittels Enzymen, z.B. Bakterienproteasen oder Papain, zu den Aminosäuren abbauen.

Eine besonders vorteilhafte Verwendung der erfindungsgemäßen Eiweißabbauprodukte, besonders derjenigen von Keratin, liegt in ihrem Einsatz als Fleischaromaprecursor.

Es ist bekannt, Fleischaromen herzustellen, indem man Aromaprecursorsysteme des Fleisches unter bestimmten Bedingungen kondensieren läßt.

Als derartige Precursors wurden bisher genannt: Aminosäuren, Monosaccharide (Hexosen, wie Glucose und Fructose oder Pentosen, wie Ribose, Xylose und Arabinose), Ribonucleotide, wie Inosinsäure und Guanosinsäure, Ascorbinsäure und Thiaminhydrochlorid.

All diesen, zu hochwertigem Fleischaroma führenden Kondensationssystemen ist als Schlüsselsubstanz die Aminosäure Cystein gemeinsam. Diese Aminosäure wurde bislang als Reinsubstanz eingesetzt und verwendet. Die Kosten für die Herstelltung dieses Naturproduktes sind hoch und lassen daher die Kosten für die Fleischaromaherstellung so ansteigen, daß diese Reinsubstanz nur für ganz spezielle Zwecke hoher Qualitätsanforderungen in künstlichen Fleischaromen verwendet werden konnte.

Da offenbar der aus dem Cystein freigesetzte Schwefelwasserstoff für Fleischaromabildung entscheidend ist, hat man versucht, Cystein durch Schwefelwasserstoff direkt bei der Aromaherstellung zu ersetzen. Dies führt jedoch zu einem qualitativ minderwertigen Fleischaroma. Derartige Präparate haben sich bislang nicht durchsetzen lassen.

Die als Fleischaromaprecursor bevorzugten erfindungsgemäßen Eiweißabbauprodukte enthalten nun einerseits Cystein in einer Konzentration von 2-20 % und andererseits ebenfalls für die Aromabildung notwendige andere Aminosäuren. Es wurde gefunden, daß man durch die erfindungsgemäße Kombination von Hydrolyse und Elektrolyse cystinhaltiger natürlicher Eiweißstoffe ein neutrales, hochwertiges, sehr reines Gemisch von L-Cystein und anderen Aminosäuren herstellen kann, das zur Gewinnung eines ausgezeichneten und wohlfeilen Fleischaromas besonders geeignet ist.

Als geeignete, cystinreiche Ausgangsmaterialien kommen insbesondere tierische Eiweißstoffe, vor allem Keratine in Betracht, wie Haare, Horn, Federn, Wolle u. dgl. oder auch pflanzliche Eiweißstoffe wie Weizenkleber, das Eiweiß der Dikanuss (Irvingia gabonensis) oder der Dessertdattel (Balanites aegyptiaca). Die tierischen Eiweißstoffe sind als Ausgangsmaterial besonders geeignet, da sie in ihrer Zusammensetzung der des Fleisches besonders ähnlich sind.

Die Gewinnung eines zur Fleischaromaherstellung besonders geeigneten cysteinhaltigen Eiweißabbauproduktes nach dem erfindungsgemäßen Verfahren ist deshalb überraschend, da bei einer Elektrolyse eines Eiweißhydrolysates eher zu erwarten war, daß Nebenprodukte entstehen, die einer Verwendung des Eiweißabbauproduktes als Aromaprecursor entgegenstehen. Dies gilt besonders für den Fall der elektrolytischen Neutralisation.

Durch das erfindungsgemäße Verfahren entsteht jedoch ein sehr reines, helles und neutrales Eiweißabbauprodukt. Dieses schon sehr reine Hydrolysat kann besonders leicht und wirtschaftlich weiteren Reinigungsschritten unterworfen werden, wie z.B. der Kohleabsorption, der Extraktion oder der Dialyse zur Befreiung der reinen Aminosäuren von petidischen Restbruchstücken.

Zur Herstellung des endgültigen Fleischaromas wird ein derartiges Aminosäureprecursorprodukt mit an sich bekannten, kondensierbaren "Maillard-Systemen" zur Reaktion gebracht. Geeignet hierfür ist die Umsetzung mit Pentosen, Hexosen, Ascorbinsäure, Ribonucleotiden, Hefeextrakten und dgl..

Das erfindungsgemäße Eiweißabbauprodukt kann außer als Fleischaroma auch als Proteinquelle in Futtermitteln, als Düngemittelzusatz und als Nährbodenkomponente für Fermentationszwecke besonders vorteilhaft verwendet werden.

## BEISPIEL 1

500 g Hühnerfedern werden in 1 l Salzsäure (26 %ig) gelöst und 10 h bei 108 °C hydrolysiert. Die überschüssige Salzsäure wird unter Vakuum abgedampft und der Rückstand bis zu einer Feststoffkonzentration von 40 % mit Wasser wieder aufgenommen. Von den ausgefallenen Huminstoffen wird unter Zuhilfenahme von Kieselgur als Filterhilfsmittel abfiltriert. Man erhält eine Lösung mit einem pH-Wert von 0,3 und einem Chloridgehalt von 10 % als Filtrat.

In einem 3 l Becherglas wird eine runde Kupferkathode eingebracht und ein am Boden geschlossener Tonzylinder hineingestellt. Als Anode wird ein Graphitstab im Tonzylinder befestigt. Den Kathodenraum füllt man mit dem Hydrolysat. Durch den Anodenraum läßt man 5 %ige Salzsäure derart von unten nach oben strömen, daß ein 3,6-facher Austausch/h erfolgt. Auf gleichem Niveau wie die Kathodenflüssigkeit wird die Anodenflüssigkeit abgezogen. Bei dieser Verfahrensweise tritt keine Zerstörung des Anodengraphits ein. Über 44 h wird mit 12 A und 4 V elektrolysiert (4224 Wh/kg = 0,48 kWh/Mol, wobei 120 als durchschnittliches Molgewicht im Keratineiweiß angesetzt wurde).

Das Hydrolysat hat einen pH-Wert von 4,5 und ist honiggelb. Nach geringfügiger Kohlung mit 5 g Carboraffin wird das Produkt zu einer hellen Paste mit 80 % Feststoffgehalt eingeengt. Der Feststoff besteht zu mind. 70 % aus reinen Aminosäuren in ausgewogener Bilanz. Der Rest sind Oligopeptide und andere Inhaltsstoffe des ursprünglichen Eiweißstoffes. Da die vorliegenden Aminosäuren sofort resorbiert werden können, eignet sich die Paste hervorragend als besonders eiweißreicher Futtermittelzusatz.

## BEISPIEL 2

600 kg Hornschrot werden in 2000 l Salzsäure (26 %ig) wie in Beispiel 1 hydrolysiert. Nach dem Verdampfen der Salzsäure, Aufnehmen mit Wasser und Filtrieren der Huminstoffe erhält man eine 40 %ige Lösung mit einem pH-Wert von 0,3.

In einer zehnzelligen, kontinuierlichen Anlage, wie sie z.B. in der DE-OS 16 43 285.2 beschrieben ist, läßt man diese Lösung passieren. Zur Schonung der Graphitanoden wird 30 %ige Salzsäure so lange im Kreislauf gefahren, bis sich eine Konzentration von 16 % eingestellt hat. Bei 500 A und 30 kWh erreicht man bis zum pH-Wert von 4,5 eine Durchlaufgeschwindigkeit von 3,5 l/h. Der Keratingehalt betrug 225 g/l. Dies bedeutet einen Ernergieverbrauch von 8,84 kWh/kg Keratin.

Läßt man die gleiche Lösung bei 8 %iger Anodenflüssigkeit die Anlage passieren, so steigt der Durchsatz und der Energieverbrauch beträgt nur noch 4,23 kWh/kg Keratin. Die Anodenflüssigkeit strömt dabei mit 5-fachem Austausch/h an den Anoden vorbei und wird oben auf gleicher Niveauhöhe wie die Kathodenflüssigkeit abgesaugt.

Es resultiert eine honiggelbe Lösung mit pH 4,5 und einer Refraktion von 30°.

Sprühtrocknung unter Zuhilfenahme von 1,5% Aerosil ergibt ein helles Pulver, das zu mind. 75% aus reinen Aminosäuren in ausgewogener Bilanz besteht.

Ausbeute: 500 kg

## BEISPIEL 3

500 g Haare werden in 3 l Salzsäure (26%-ig) gelöst und 10 h hydrolysiert. Die überschüssige Salzsäure wird unter Vakuum abgedampft und der Rückstand bis zur Refraktion 40° mit Wasser aufgenommen. Gemäß Beispiel 1 wird elektrolytisch aufgearbeitet.

Während der Elektrolyse hat sich in der honiggelben Lösung ein Niederschlag gebildet, der durch Kristallisation stärker wird. Er besteht im wesentlichen aus Tyrosin. Das hellgelbe Produkt wird abgesaugt und dient zur Isolierung der Aminosäure Tyrosin nach der üblichen Methode.

Ausbeute Tyrosin: 3,9 g $\triangleq$ 0,78% = 39% des ursprünglich vorhandenen Tyrosins (2,0%)

Das Filtrat wird mit 5 g Carboraffin behandelt und filtriert. Es resultiert eine gelbe Lösung. Aus dieser wird durch Einblasen von Luft und Kristallisation bei Raumtemperatur unter Rühren L-Cystin gewonnen.

Ausbeute: 65 g $\triangleq$ 13% bezogen auf Haare bzw. 86% bezogen auf analytisch bestimmtes Cystin (15,1%)

Analyse: $\alpha_{20}^{D}$ = -219,5

Gehalt: 99,0%

Die Mutterlauge (Refr. 38) wird mit 125 ml 30%-iger Salzsäure auf pH 3,0 gestellt. Nach Zugabe von Glutaminsäure-Impfkristallen läßt man 8 Tage bei Raumtemperatur kristallisieren. Absaugen und Waschen ergaben 35 g L-Glutaminsäure = 7% bezogen auf Keratin oder 65% bezogen auf vorhandene Glutaminsäure (13%).

Nochmalige elektrolytische Neutralisation der Mutterlauge bis pH 6 mit 190 Ah bei 4 V ergibt ein im wesentlichen aus L-Aminosäuren bestehendes Gemisch, das sich durch Sprühtrocknen zu einem beigefarbenen Produkt überführen läßt.

Ausbeute: 350 g

Aufgrund seiner Aminosäurezusammensetzung ist dieses Produkt vorzüglich als Futter- oder Düngemittelzusatz bzw. als Nährbodenkomponente für Fermentationszwecke geeignet.

## BEISPIEL 4

2 l Schlempe werden mit der gleichen Litermenge 30%-iger Salzsäure vermischt und 12 h hydrolysiert. Von den unlöslichen Huminen wird unter Zuhilfenahme von 10 g Kieselgur abfiltriert. Die überschüssige Salzsäure wird abgedampft und der Rückstand bis zur Refraktion 45° mit Wasser aufgenommen. In der oben beschriebenen Apparatur wird diese Lösung gemäß Beispiel 1 an einer Bleikathode 20 h bei 4 V und 10 A elektrolytisch neutralisiert. Es resultiert ein honiggelbes Produkt mit einem pH-Wert von 3,0. Nach Zugabe von 5 g Carboraffin wird filtriert und das Filtrat bei 6°C sechs Tage kristallisiert.

Es resultieren 15 g Glutaminsäure mit einem Reinheitsgrad von bereits 96-99%. Die übliche Reinigung bringt 11,8 g $\Delta$ 5,9% = 70% der vorhandenen Menge Glutaminsäure. Das Filtrat wird nochmals elektrolytisch bis zu einem pH-Wert von 4,5 neutralisiert. Es kristallisiert bei 60° innerhalb von 24 h 2 g Tyrosin mit einem Reinheitsgrad von 95% aus. Reinausbeute Tyrosin: 1,5 g $\Delta$ 0,1%. Die Kristallisation des Filtrats bei 10°C über nochmals 24 h bringt 4 g überwiegend L-Leucin, das durch übliche Reinigung in 2 g Reinleucin übergeführt werden kann.

## BEISPIEL 5

500 g Casein wird in 3 l 26%-iger Salzsäure hydrolysiert. Nach der Aufarbeitung gemäß Beispiel 1 resultiert ein honiggelbes Elektrolysat. Nach der Behandlung mit 10 g Carboraffin wird das honiggelbe Filtrat über ein 500 Ultrafilter, $\phi$ 7 cm, gegeben. Die Filtration (2 l) bei 25 bar dauert 4 h. Der Stickstoffverlust beträgt 2,6%. Durch einfaches Trocknen, z.B. im Vakuumschrank, erhält man ein farbloses, praktisch nicht mehr hygroskopisches Pulver.
Ausbeute: 420 g
Die Analyse zeigt einen Gehalt an freien Aminosäuren von 98% an. Das Produkt ist hervorragend für diätetische, kosmetische und orale medizinische Zwecke geeignet.

## BEISPIEL 6

500 g Haare werden in 1,5 l Salzsäure (30%-ig) bei 50-60°C gelöst. Die überschüssige Salzsäure wird bei max. 60°C im Vakuum verdampft. Den Rückstand nimmt man bis zur Refraktion 40° (Zuckerrefraktometer) mit Wasser wieder auf. Nach Kohlung und Filtration elektrolysiert man unter Kühlung (max. 40°C) an einer Pb-Kathode bis pH 4,5. Es werden 3,5 kWh/kg Keratin verbraucht. Die erhaltene Lösung läßt sich unschwer trocknen. Man erhält 400 g eines beigefarbenen Pulvers. Als wasserlösliche, SH-haltige, hochmolekulare Keratinpeptide eignen sie sich hervorragend zum Einsatz in der Haarkosmetik für z.B. vernetzende Zwecke.

## BEISPIEL 7

500 g Schweineborsten werden in 1,5 l Salzsäure bei max. 60°C gelöst und gemäß Beispiel 6 aufgearbeitet. Das Elektrolysat wird bei pH 6 und 37°C 2 Tage lang mit handelsüblicher Bakterienprotease behandelt. Man erhält 42 g L-Cystin üblicher Reinheit.
Ausbeute: 8,4% = 78% der analytisch nachgewiesenen Cystinmenge

## Beispiel 8

500 g Schweineborsten werden in 3 l 26%-iger Salzsäure gelöst und 10 h hydrolysiert. Die überschüssige Salzsäure wird unter Vakuum abgedampft und der Rückstand bis zur Refraktion 40° (Zuckerrefraktometer) mit Wasser aufgenommen. Nach Zusatz von 5 g Carboraffin wird filtriert. An einer Kupferkathode wird das Hydrolysat elektrolytisch neutralisiert, wobei nach 300 Ah (bei 4-5 V) ein pH-Wert von 4,9 erreicht wird. Cystin ist dabei quantitativ zu Cystein reduziert worden.
Cystingehalt vor der Elektrolyse nach Folin-Marensi:
25,4 mg/ml
Cysteingehalt nach der Elektrolyse (potentiometrische SH-Titration mit $HgCl_2$):
24,2 mg/ml
Die hellgelbe Lösung wird mit 50 g Aktivkohle behandelt und filtriert. Trocknen der farblosen Lösung ergibt 407,8 g = 81,2% eines nahezu farblosen Produktes.
Cysteingehalt des Fleischaromaprecursors: 12%

## BEISPIEL 9

Gemäß Beispiel 8 werden 500 g Hornschrot hydrolysiert und aufgearbeitet. Es resultieren 450 g eines beigefarbenen Fleischaromaprecursors mit einem Cysteingehalt von 7%.

## BEISPIEL 10

Gemäß Beispiel 8 werden behandelte Hühnerfedern hydrolysiert. 432 g des honiggelben Fleischaromaprecursors enthalten 6,5% L-Cystein.

## BEISPIEL 11

500 g Weizenkleber werden in 1 l 30%-iger Salzsäure gelöst und 10 h bei 108°C hydrolysiert. Die Lösung wird nach Aktivkohleklärung und Filtration mit Soda bis pH 6 neutralisiert. Vom Rückstand wird nach 24-stündiger Kristallisation abfiltriert. Man läßt die Lösung 4 Tage reifen. Anschließend wird mit 10 A und 4 V an einer Kupferelektrode 3 h elektrolysiert. Das geringfügig anwesende Cystin wird dabei zu Cystein reduziert (Cystin 2,5% bezogen auf eingesetzten Kleber).

BEISPIEL 12 (Vergleichsbeispiel)

3 g L-Cystein, 30g hydrolysierter Weizenkleber, der durch normale Neutralisation mit Soda hergestellt wurde, 0,3 g eines Inosin- und Guanosinsäuregemisches sowie 5 g Xylose werden 3 h unter Rückfluß gekocht und 10 h bei 70°C gehalten. Nach 2-tägigem Reifeprozess und Trockendampfen resultiert ein Produkt, das in bekannt guter Art nach gebratenem Rindfleisch roch.

BEISPIEL 13

Entsprechend Beispiel 11 werden 2,5 g Cystein und 30 g eines hydrolysierten Weizenklebers mit elektrolytischer Nachbehandlung gemäß Beispiel 11 0,3 g Inosin- und Guanosinsäure sowie 5 g Xylose gemäß Beispiel 12 aufgearbeitet. Es resultiert ein Fleischaroma, das von 5 Testpersonen besser als das nach Beispiel 12 hergestellte Aroma beurteilt wurde.

BEISPIEL 14

Von gemäß Beispiel 8 hergestellten Fleischaromaprecursor werden 25 g mit 5 g Xylose, 0,3 g eines Gemisches von Inosin- und Guanosinsäure gemäß Beispiel 12 aufgearbeitet. Das hieraus resultierende Fleischaroma wurde wiederum von 5 Testpersonen besser beurteilt als das gemäß Beispiel 12 hergestellte Aroma.

BEISPIEL 15

46 g eines nach Beispiel 10 hergestellten Aromaprecursors werden mit 5 g Ribose, 5 g Glucose sowie 0,1 g Inosin- und Guanosinsäure 3 h unter Rückfluß gekocht und 10 h bei 70 °C gehalten. 2-tägiges Reiben und Trocknen bringt ein Produkt mit intensivem Aroma nach gebratenem Rindfleisch.

BEISPIEL 16

500 g Schweineborsten werden in 1,5 l Salzsäure (30 %ig) gelöst und 10 h bei 108 °C hydrolysiert. Die überschüssige Salzsäure wir unter Vakuum abgedampft und der Rückstand bis zur Refraktion 40° mit Wasser aufgenommen.
Der Rückstand in Wasser wird an einer Kupferkathode elektrolytisch aufgearbeitet bis pH = 1,8, wozu 12 h mit 12 A und 4 V elektrolysiert wird (1152 Wh/kg = 0,14 kWh/mol). Während der Elektrolyse erhellt sich die Lösung beträchtlich. Bei diesem pH-Wert bleiben alle im Keratin vorhandenen Aminosäuren, auch Cystin und Tyrosin, in Lösung.
Nach geringfügiger Kohlung mit 5 g Carboraffin liegt eine honiggelbe Lösung, die aus 25 % reinen Aminosäuren in ausgewogener Bilanz besteht, vor. Die vorliegende Lösung kann direkt in flüssiger Form oder nach Sprüntrocknung als Pulver weiterverarbeitet werden.
Ausbeute: 420 g Trockensubstanz

**Patentansprüche**

1. Verfahren zur Herstellung eines mineralsalzfreien Gesamteiweiß-Abbauprodukts bestehend aus mindestens 60 Gew.% aus einer Mischung der Aminosäuren, aus denen der natürliche Eiweißstoff aufgebaut ist, wobei der Cysteingehalt 2-20 % beträgt, und Oligopeptiden, dadurch gekennzeichnet, daß man eine cysteinhaltige Proteinquelle aus der Gruppe Keratine, Weizenkleber und Sojaprotein mit Salzsäure hydrolysiert, das erhaltene Eiweißhydrolysat einer elektrolytischen Neutralisation und Reduktion unter Verwendung eines Diaphragmas unterwirft und das Elektrolysat anschließend gegebenenfalls eindampft.

2. Verfahren nach Anspruch 1, dadurch gekennzeichnet, daß man als Keratinquelle Haare, Schweineborsten, Horn, Federn oder Wolle einsetzt.

3. Verfahren nach Anspruch 1 oder 2, dadurch gekennzeichnet, daß man die Säure vor der elektrolytischen Neutralisation weitgehend abdampft.

4. Verfahren nach einem der vorhergehenden Ansprüche, dadurch gekennzeichnet, daß man die elektrolytische Neutralisation und Reduktion bei einer Temperatur von 10-60°C, vorzugsweise 20-60°C, bei einer Stromdichte von 0,005-0,3, vorzugsweise 0,01-0,2 A/cm$^2$ und bei einem Elektropotential von 4-40 Volt, vorzugsweise 6-30 Volt durchführt.

5. Verfahren nach einem der vorhergehenden Ansprüche, dadurch gekennzeichnet, daß man die elektrolytische Neutralisation und Reduktion bei einer Substrat-Konzentration von 10-80 Gew.-%, vorzugsweise 30-50 Gew.-%, bezogen auf Feststoff-Trockensubstanz und einer niederen Mineralsäurekonzentration von 2-20, vorzugsweise 4-10 % im Anodenraum durchführt.

6. Verfahren nach einem der vorhergehenden Ansprüche, dadurch gekennzeichnet, daß man die elektrolytische Neutralisation und Reduktion an Kathoden aus Quecksilber, Kupfer, Blei, Eisen oder Zinn und Anoden aus Kohle, Platin oder anderen oxydationsunempfindlichen Materialien durchführt.

7. Verfahren nach einem der vorhergehenden Ansprüche, dadurch gekennzeichnet, daß man während der elektrolytischen Neutralisation und Reduktion als Diaphragma eine Membran mit einer Porengröße von 0,5-10 $\mu$ verwendet.

8. Verfahren nach einem der vorhergehenden Ansprüche, dadurch gekennzeichnet, daß die Anodenflüssigkeit an der Anode vorbeifließen gelassen wird.

9. Verwendung eines Gesamteiweiß-Abbauprodukts, hergestellt nach einem der Ansprüche 1-8 als Fleischaromaprecursor.

10. Verwendung eines Gesamteiweiß-Abbauprodukts, hergestellt nach einem der Ansprüche 1-8 zur Herstellung eines Fleischaromas in einem Maillard-System.

11. Verwendung eines Gesamteiweiß-Abbauproduktes, hergestellt nach einem der Ansprüche 1-8 als Proteinquelle in Futtermitteln, als Düngemittelzusatz und als Nährbodenkomponente für Fermentationszwecke.

## Claims

1. A method of producing a total proteolysis product free from mineral salt and containing at least 60% by weight of a mixture of the amino acids making up the natural protein, the cysteine content being 2 - 20%, together with oligopeptides, characterised in that a cysteine-containing protein source from the group consisting of keratin, wheat gluten and soya protein is hydrolysed with hydrochloric acid, the resulting protein hydrolysate is electrolytically neutralised and reduced, using a diaphragm, and the electrolysate is then optionally concentrated by evaporation.

2. A method according to claim 1, characterised in that the source of keratin is hair, pig's bristles, horn, feathers or wool.

3. A method according to claim 1 or 2, characterised in that the acid is substantially removed by evaporation before electrolytic neutralisation.

4. A method according to any of the preceding claims, characterised in that electrolytic neutralisation and reduction are brought about at a temperature of 10 - 60 °C, preferably 20 - 60 °C, at a current density of 0.005 - 0.3, preferably 0.01 - 0.2 A/cm$^2$ and at an electric potential of 4 - 40 volts, preferably 6 - 30 volts.

5. A method according to any of the preceding claims, characterised in that electrolytic neutralisation and reduction are brought about at a substrate concentration of 10 - 80% by weight, preferably 30 - 50% by weight, relative to dry solids, and a low mineral acid concentration of 2 - 20, preferably 4 - 10% in the anode space.

6. A method according to any of the preceding claims, characterised in that electrolytic neutralisation and reduction are brought about on cathodes made of mercury, copper, lead, iron or tin and anodes made of carbon, platinum or other materials insensitive to oxidation.

7. A method according to any of the preceding claims, characterised in that the diaphragm used during electrolytic neutralisation and reduction is a membrane having a pore size of 0.5 - 10 $\mu$.

8. A method according to any of the preceding claims, characterised in that the anode liquid is caused to flow past the anode.

9. Use of a total proteolysis product manufactured according to any of claims 1 to 8 and used as a meat flavouring precursor.

10. Use of a total proteolysis product manufactured according to any of claims 1 to 8 for producing a meat flavouring in a Maillard system.

11. Use of a total proteolysis product manufactured according to any of claims 1 - 8 as a protein source in animal food or as a fertiliser additive or nutrient medium component for fermentation purposes.

## Revendications

1. Procédé de préparation d'un produit de protéolyse de protides totaux dépourvu de sels minéraux, se composant d'au moins 60% en poids d'un mélange des acides aminés dont sont constitués les protides naturels, la teneur en cystéine s'élevant à 2-20%, et d'oligopeptides, caractérisé en ce qu'on hydrolyse par de l'acide chlorhydrique une source de protéines contenant de la cystéine, appartenant au groupe des kératines, du gluten de blé et des protéines de soja, on soumet l'hydrolysat de protides obtenu à une neutralisation et une réduction électrolytiques avec utilisation d'un diaphragme, puis on concentre éventuellement l'électrolysat par évaporation.

2. Procédé selon la revendication 1, caractérisé en ce qu'on utilise, comme source de kératine, des cheveux, des soies de porc, de la corne, des plumes ou de la laine.

3. Procédé selon la revendication 1 ou 2, caractérise en ce qu'on chasse dans une large mesure l'acide par évaporation avant la neutralisation électrolytique.

4. Procédé selon l'une quelconque des revendications 1 à 3, caractérisé en ce qu'on effectue la neutralisation et la reduction électrolytiques à une température de 10-60°C, de préférence de 20-60°C, sous une densité de courant de 0,005-0,3, de préférence de 0,01-0,2 A/cm² et à un potentiel électrique de 4-40 V, de préférence de 6-30 V.

5. Procédé selon l'une quelconque des revendications 1 à 4, caractérisé en ce qu'on effectue la neutralisation et la réduction électrolytiques à une concentration de substrat de 10-80% en poids, de préférence de 30-50% en poids par rapport à la substance sèche de la matière solide, et à une faible concentration d'acide minéral, de 2-20, de préférence de 4-10% dans le compartiment anodique.

6. Procédé selon l'une quelconque des revendications 1 à 5, caractérisé en ce qu'on effectue la neutralisation et la réduction électrolytiques sur des cathodes en mercure, en cuivre, en plomb, en fer ou en étain et sur des anodes en charbon, en platine ou en d'autres matériaux insensibles à l'oxydation.

7. Procédé selon l'une quelconque des revendications 1 à 6, caractérisé en ce qu'on utilise comme diaphragme, pendant la neutralisation et la réduction électrolytiques, une membrane ayant une grosseur de pores de 0,5-10 $\mu$m.

8. Procédé selon l'une quelconque des revendications 1 à 7, caractérisé en ce qu'on fait circuler le liquide anodique pour qu'il baigne l'anode.

9. Utilisation d'un produit de protéolyse de protides totaux, préparé selon l'une quelconque des revendications 1 à 8, comme precurseur de parfum de viande.

10. Utilisation d'un produit de protéolyse de protides totaux, préparé selon l'une quelconque des revendications 1 à 8, pour la preparation d'un parfum de viande dans un système de Maillard.

11. Utilisation d'un produit de protéolyse de protides totaux, préparé selon l'une quelconque des revendications 1 à 8, comme source de protéines dans des aliments pour animaux, comme additif dans des engrais et comme composant de couches nourricières pour des processus de fermentation.